# FASCICULE DE BREVET EUROPEEN

(11) **EP 1 578 620 B1**
(45) Date de publication et mention de la délivrance du brevet: **17.09.2008**
(21) Numéro de dépôt: 03779985.5
(22) Date de dépôt: 19.11.2003
(51) Int. Cl.: B60C 9/09

(54) **PNEUMATIQUE A MOBILITE ETENDUE AVEC FLANCS A RIGIDITE VARIABLE**
NOTLAUFREIFEN MIT SEITENWÄNDEN MIT UNTERSCHIEDLICHER STEIFIGKEIT
RUN-FLAT TYRE WITH VARIABLE-RIGIDITY SIDEWALLS

(30) Priorité: 26.12.2002 FR 0216749
(43) Date de publication de la demande: 28.09.2005
(73) Titulaire: Société de Technologie Michelin, 63000 Clermont-Ferrand (FR); Michelin Recherche et Technique S.A., 1763 Granges-Paccot (CH)
(72) Inventeur: MERINO LOPEZ, Jose, F-63200 Riom (FR)
(74) Mandataire: Dequire, Philippe Jean-Marie Denis
(86) Numéro de dépôt international: PCT/EP2003/012925
(87) Numéro de publication internationale: WO 2004/058516

(56) Documents cités:
- WO-A-02/09956
- WO-A-02/30688
- PATENT ABSTRACTS OF JAPAN vol. 1998, no. 06, 30 avril 1998 (1998-04-30) -& JP 10 044721 A (TOYO TIRE &RUBBER CO LTD; FUJI SEIKO KK), 17 février 1998 (1998-02-17)

## Description

La présente invention concerne les pneumatiques. Plus particulièrement, elle concerne un pneumatique comportant un agencement particulier des éléments architecturaux disposés dans la zone des flancs, permettant, d'une part, en condition de pression sensiblement normale, l'obtention de flancs souples, susceptibles de conférer des qualités, notamment de confort et de résistance au roulement, particulièrement favorables, et d'autre part, en condition de pression réduite, l'obtention de flancs rigidifiés, susceptibles de permettre de supporter la charge du pneumatique, en respectant certaines limites.

Depuis quelques années, les manufacturiers de pneumatiques consentent des efforts particulièrement importants afin de développer des solutions originales à un problème datant du début même de l'utilisation des roues chaussées de pneus de type gonflés, à savoir comment permettre au véhicule de poursuivre sa route malgré une perte importante ou totale de pression d'un ou plusieurs pneumatiques. Pendant des décennies, la roue de secours fut considérée comme la solution unique et universelle. Puis, plus récemment, les avantages considérables liés à sa suppression éventuelle sont apparus. Le concept de « mobilité étendue » se développe. Les techniques associées permettent de rouler avec le même pneumatique, en fonction de certaines limites à respecter, après une crevaison ou une chute de pression. Cela permet par exemple de se rendre à un point de dépannage sans devoir s'arrêter, dans des circonstances souvent hasardeuses, pour installer la roue de secours.

Deux grands types de technologies pour mobilité étendue apparaissent aujourd'hui sur le marché automobile. D'une part, on retrouve les pneumatiques de type autoporteur, (souvent désignés par leur appellation en langue anglaise ZP pour « zero pressure »). Les pneus autoporteurs sont susceptibles de supporter une charge à pression réduite, voire sans pression, grâce à des flancs renforcés, le plus souvent au moyen d'inserts en matière caoutchoutique, prévus dans les flancs. La rigidité structurelle des flancs d'un pneumatique de ce type est très élevée. Les technologies à flancs renforcés privilégient le fonctionnement en mode dégradé, normalement exceptionnel, ou tout au moins très occasionnel pour la grande majorité des véhicules, au détriment du fonctionnement courant, qui subit les inconvénients liés de façon intrinsèque au principe des flancs renforcés. En fonctionnement normal, à la pression nominale d'utilisation, ceci peut entraîner d'importantes pénalisation en terme de résistance au roulement et de confort. Par ailleurs, la forte tendance de la zone basse du pneumatique à vouloir glisser hors de la jante sous l'effet de l'affaissement des flancs peut limiter la portée de cette solution.

Les documents US 6 453 961 et PCT/US99/11081 illustrent différentes techniques utilisées dans des pneumatiques à flancs autoporteurs afin de réduire l'impact des flancs trop rigides en mode de fonctionnement à pression normale. Le premier document décrit un pneumatique comportant un insert circonférentiel constitué de matériau élastomérique poreux, situé dans la portion axialement interne d'un insert de flanc. La portion poreuse permet de maintenir une certaine souplesse au flanc en mode normal. A pression réduite, les pores sont écrasés, augmentant ainsi la rigidité du flanc pour permettre un bon maintient. Le second document décrit un pneumatique dont une des séries de renfort radiaux de flancs est constituée de fils à module variable. On obtient donc un effet similaire de variation de la rigidité en fonction de l'écrasement du flanc.

D'autre part, on retrouve des roues équipées d'appuis, susceptibles de supporter l'intérieur de la bande de roulement d'un pneumatique lors d'un affaissement des flancs suite à une chute de pression. Cette solution est avantageusement couplée à un pneumatique comportant une zone basse susceptible de minimiser les risques de glissement du pneumatique hors de la jante. Cette solution est avantageuse puisqu'elle permet de conserver sensiblement intactes les caractéristiques de roulage en conditions normales. Par contre, elle présente l'inconvénient de nécessiter une pièce additionnelle, l'appui, pour chacune des roues du véhicule.

### Le document JP-A-10 044721 décrit un Pneumatique selon le préambule de la revendication 1. II est considéré comme étant l'état de la technique le plus proche.

Ainsi, afin de pallier ces différents inconvénients, l'invention prévoit un pneumatique comportant au moins une structure de renfort de type carcasse ancrée de chaque côté du pneumatique dans un bourrelet dont la base est destinée à être montée sur un siège de jante, chaque bourrelet se prolongeant radialement vers l'extérieur par un flanc, les flancs rejoignant radialement vers l'extérieur une bande de roulement et comportant au moins un moyen de support de flanc à augmentation de rigidité sensiblement progressive, disposé dans la portion sensiblement médiane desdits flancs, la structure de renfort de type carcasse s'étendant circonférentiellement depuis le bourrelet vers ledit flanc, une armature de sommet, chacun des bourrelets comportant par ailleurs une zone d'ancrage permettant le maintien de la structure de renfort dans chacun desdits bourrelets, ledit moyen de support comporte au moins un fil circonférentiel agencés sur la circonférence suivant des positions axiales différentes, de façon à former le long du parcours circonférentiel, une succession d'ondulations sensiblement régulières formant un profil circonférentiel ondulé.

Si l'utilisation d'un enroulement circonférentiel d'un fil en renfort de flanc est connue du document WO-A-02/09956, ce renfort ne comporte pas d'ondulations circonférentielles.

La solution proposée par la présente invention permet de s'affranchir de la plupart des inconvénients liés au techniques actuelles permettant la mobilité étendue. D'une part, le pneumatique ne nécessite pas d'appui pour rouler à faible pression ; d'autre part, il ne dispose pas de flancs rigides renforcés par exemple à l'aide d'inserts en matière caoutchoutique. Les flancs présentent une rigidité structurelle variable avec la flèche du pneumatique. Ainsi, quand le pneu roule avec sa pression nominale, la rigidité structurelle est celle d'un pneu standard. Les flancs présentent une souplesse avantageusement comparable à un pneumatique traditionnel. Les caractéristiques favorables telles qu'un haut niveau de confort, une faible résistance au roulement, une bonne endurance, etc, peuvent être maintenues. Le pneumatique selon l'invention présente ainsi les avantages liés au pneu autoporteur, qui permet d'assurer une mobilité étendue, sans toutefois comporter les inconvénients qui affectent les qualités du pneumatiques en utilisation courante à pression sensiblement normale.

En mode « mobilité étendue », lorsque la pression chute, la diminution de pression provoque une augmentation de la flèche, et par le fait même, de la rigidité structurelle des flancs : de façon sensiblement progressive, en particulier au niveau de la zone du pneumatique à proximité de l'aire de contact avec le sol, avec l'apparition progressive d'une force de tension de plus en plus grande dans les moyens de support, la rigidité desdits moyens de support augmente. Ces phénomènes entraînent un blocage graduel du flambage des flancs, jusqu'à l'obtention d'une force de soutien susceptible de supporter les efforts transmis par les flancs. On obtient enfin, après mise sous tension des moyens de support, des flancs pouvant supporter la charge. La charge est donc en bonne partie supportée par les moyens de support de flancs. Contrairement aux moyens de type connus, ces moyens, grâce à une action de type circonférentielle, produisent une réaction de type radiale.

Puisque, après étirement des moyens de support dans les flancs, le flambage des flancs est en quelque sorte « bloqué », il ne se produit pas d'affaissement important, voire total, du pneumatique, en particulier au niveau de l'aire de contact. La charge est donc en bonne partie supportée par la mise en tension des moyens de support. Ainsi, avec une pression fortement réduite ou nulle, le pneumatique fonctionne avec une flèche plus importante et une rigidité structurelle considérablement plus élevée, non seulement afin d'empêcher l'affaissement total des flancs, mais également pour permettre de supporter la charge malgré la chute de pression, de façon comparable à un pneu autoporteur.

Le ou lesdits fils sont agencés sur la circonférence suivant des positions axiales différentes, de façon à former le long du parcours circonférentiel, une succession d'ondulations sensiblement régulières formant un profil circonférentiel ondulé. II s'agit d'une façon astucieuse et pratique de réaliser la fonction d'élasticité des fils circonférentiels. Dans un tel cas de figure, les fils en tant que tels peuvent être sensiblement rigides. Grâce à l'agencement des fils de façon ondulée, on obtient l'élasticité requise.

Selon une variante de réalisation avantageuse, ladite structure de renfort de type carcasse est agencée de façon à ce que, dans la portion sensiblement médiane du flanc, les fils de ladite structure de renfort comportent, sur la circonférence, des positions axiales différentes, de façon à former le long du parcours circonférentiel, une succession d'ondulations sensiblement régulières formant un profil circonférentiel ondulé.

Selon une variante de réalisation avantageuse, les ondulations formées par lesdits fils circonférentiels d'une part et les ondulations formées par les fils de structure de renfort d'autre part, sont sensiblement en correspondance (sont sensiblement alignées circonférentiellement).

En mode « mobilité étendue», lorsque la pression chute, la diminution de pression provoque une augmentation de la flèche, et par le fait même, de la rigidité structurelle des flancs : de façon sensiblement progressive, en particulier au niveau de la zone du pneumatique à proximité de l'aire de contact avec le sol, les ondulations de la structure de renfort de type carcasse s'aplanissent ou s'atténuent ; les ondulations des fils circonférentiels font de même, avec l'apparition progressive d'une force de tension de plus en plus grande dans les fils circonférentiels. Ces phénomènes entraînent un blocage graduel du flambage des flancs, jusqu'à l'obtention d'une force de soutien susceptible de supporter les efforts transmis par les flancs. On obtient enfin, après mise sous tension des fils, des flancs pouvant supporter la charge.

Selon un mode de réalisation avantageux de l'invention, la surface extérieure dudit flanc du pneumatique, dans la zone où la structure de renfort comporte lesdites ondulations, comporte également un profil circonférentiel ondulé, sensiblement en correspondance avec ledit profil formé par ladite structure de renfort. On prévoit préférentiellement des ondulations de la position des renfort et de la bordure du flanc d'amplitudes et fréquences sensiblement similaires. On obtient alors une configuration homogène. Par ailleurs, les ondulations de flanc permettent de visualiser les caractéristiques architecturales internes du pneumatique. Ce dernier aspect permet par exemple de mieux identifier ce type de technologie.

Selon une variante, la surface extérieure du flanc est sensiblement rectiligne. L'architecture particulière de la structure de renfort n'est donc pas révélée, et le profil du flanc est classiquement configuré.

Les parcours des structures de renfort de type carcasse peuvent être agencés selon deux types de configurations, soit par exemple une configuration « en opposition de phase », dans laquelle la position radiale d'un fil de renfort, pour une position circonférentielle donnée du profil circonférentiel ondulé, est sensiblement symétrique dans chaque flanc par rapport au plan médian dudit pneumatique ; ou une configuration « en phase », dans laquelle, la position radiale d'une portion de structure de renfort, pour une position circonférentielle donnée du profil circonférentiel ondulé, est sensiblement à l'opposée dans chaque flanc.

Tous les détails de réalisation sont donnés dans la description qui suit, complétée par les figures 1 à 7 où:
la figure 1 illustre une coupe d'un pneumatique comportant des câbles circonférentiels selon l'invention ;
la figure 2 illustre une coupe circonférentielle en vue partielle montrant essentiellement un flanc dans lequel un fil circonféntiel est disposé ;
les figures 3a et 3b sont des coupes radiales montrant essentiellement un bourrelet, un flanc, et la moitié du sommet de deux exemples de réalisation d'un premier type de pneumatiques selon l'invention ;
les figures 4b et 4c sont des coupes circonférentielles en vue partielles montrant essentiellement un flanc avec les positions radiales d'une série de fils de renfort en fonction de leur position radiales dans le flanc telle qu'illustrée à la figure 4a ;
les figures 5a et 5b présentent des variantes de réalisation de l'exemple de la figure 2 ;
la figure 6b illustre le profil des flancs d'un pneumatique selon l'invention selon une coupe transversale, en différentes positions illustrées à la figure 6a : en A-A', en « zone étirée » ou « flanc tendu » et en B-B', en zone « flanc ondulé » ;
la figure 7 illustre une vue en perspective d'un fil de flanc circonférentiel, agencé de façon ondulée.

L'armature de renforcement ou renforcement des pneumatiques est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Cependant, il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les fils des différentes structures de renfort sont appliqués directement sur les couches adjacentes de mélanges caoutchoutiques, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base tels les mélanges caoutchoutiques et les renforts sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des filaments circonférentiels, le tout étant noyé dans un mélange caoutchoutique d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou de renforts sous forme de filaments.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les fils de renforts d'une nappe carcasse dans le procédé classique, et les fils correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé classique, que l'ensemble formé par les filaments circonférentiels, le mélange caoutchoutique et les portions adjacentes de renfort de flanc d'une zone basse réalisée avec un procédé avec application sur un noyau toroïdal.

Dans la présente description, le terme "fil" désigne en toute généralité aussi bien des monofilaments que des multifilaments ou des assemblages comme des câbles, des retors ou encore tout type d'assemblage équivalent, et ceci, quels que soient la matière et le traitement de ces fils. Il peut s'agir par exemple de traitements de surface, enrobage ou pré-encollage pour favoriser l'adhérence sur le caoutchouc. L'expression « fil unitaire » désigne un fil composé d'un seul élément, sans assemblage. Le terme « multifilaments » désigne au contraire un assemblage d'au moins deux éléments unitaires pour former un câble, un retors, etc.

On sait que, de façon traditionnelle, la ou les nappes de carcasse sont retournées autour d'une tringle. La tringle remplit alors une fonction d'ancrage de la carcasse. Ainsi, notamment, elle supporte la tension se développant dans les fils de carcasse par exemple sous l'effet de la pression de gonflage. L'agencement décrit dans le présent document permet d'assurer une fonction similaire d'ancrage. Il est également connu d'utiliser la tringle de type traditionnel pour assurer une fonction de serrage du bourrelet sur une jante. L'agencement décrit dans le présent document permet également d'assurer un rôle similaire de serrage.

Dans la présente description, on entend par gomme ou mélange de « liaison », le mélange caoutchoutique éventuellement en contact avec les fils de renforcement, adhérant à ceux-ci et susceptible de remplir les interstices entre fils adjacents.

On entend par "contact" entre un fil et une couche de gomme de liaison le fait qu'au moins une partie de la circonférence extérieure du fil est en contact intime avec le mélange caoutchoutique constituant de la gomme de liaison.

On désigne "flancs" les portions du pneumatique le plus souvent de faible rigidité de flexion situées entre le sommet et les bourrelets. On appelle "mélange flancs" les mélanges caoutchoutiques situés axialement extérieurement relativement aux fils de la structure de renforcement de la carcasse et à leur gomme de liaison. Ces mélanges ont habituellement un bas module d'élasticité.

On appelle "bourrelet" la portion du pneumatique adjacente radialement intérieurement au flanc.

On entend par "module d'élasticité" d'un mélange caoutchoutique, un module d'extension sécant obtenu à une déformation d'extension uniaxiale de l'ordre de 10% à température ambiante.

Pour rappel, "radialement vers le haut", ou "radialement supérieur" ou "radialement extérieurement" signifie vers les plus grands rayons.

Dans le présent mémoire, le terme "fil" désigne en toute généralité aussi bien des monofilaments que des multifilaments, ou des assemblages comme des câbles, des retors ou bien encore n'importe quel type d'assemblage équivalent, et ceci, quels que soit la matière et le traitement de ces fils, par exemple traitement de surface ou enrobage ou préencollage pour favoriser l'adhérence sur le caoutchouc.

Une structure de renfort ou de renforcement de type carcasse sera dite radiale lorsque ses fils sont disposés à 90°, mais aussi, selon la terminologie en usage, à un angle proche de 90°.

Par caractéristiques du fil, on entend par exemple ses dimensions, sa composition, ses caractéristiques et propriétés mécaniques (notamment le module), ses caractéristiques et propriétés chimiques, etc.

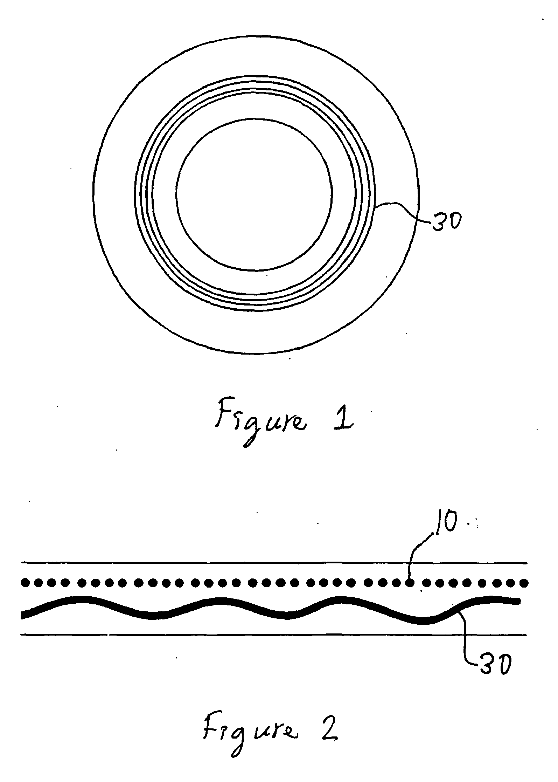

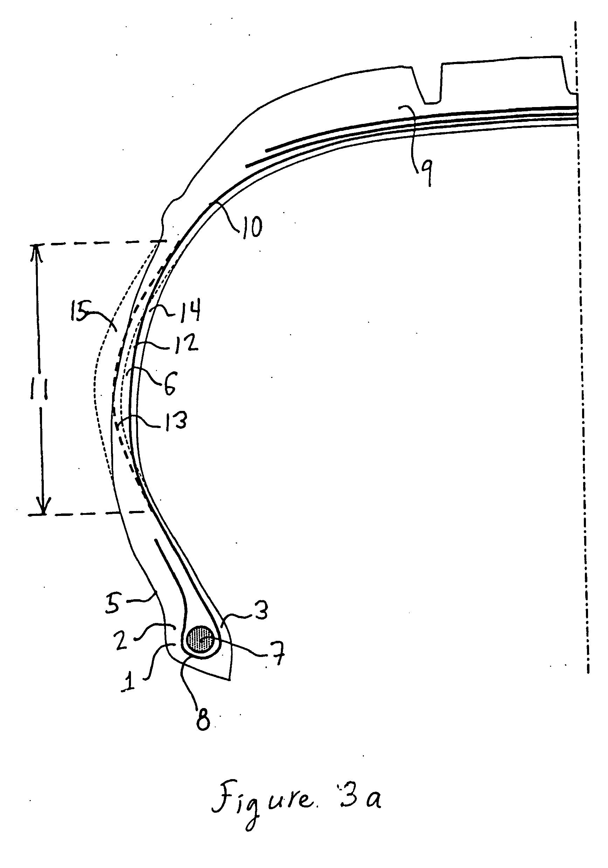

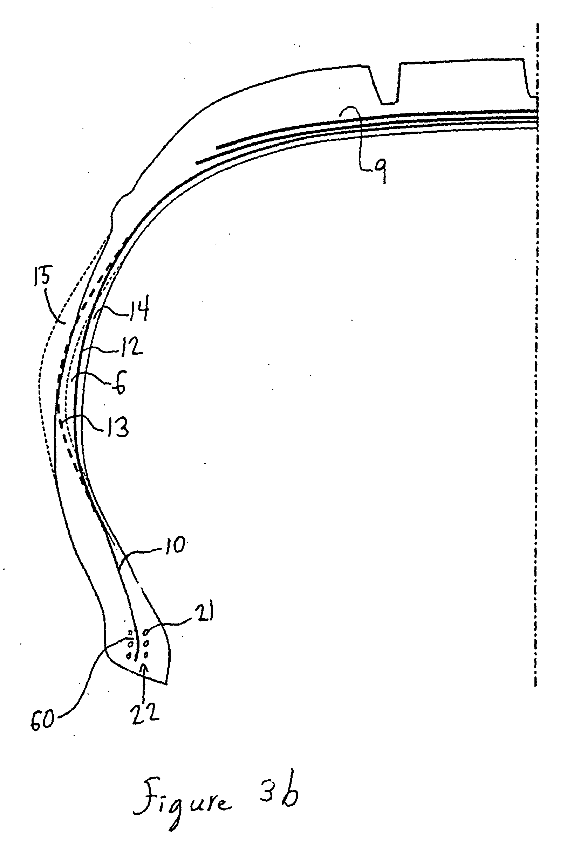

La figure 3 illustre la zone basse, notamment le bourrelet 1 d'une première forme d'exécution du pneumatique selon l'invention. Le bourrelet 1 comporte une portion axialement externe 2 prévue et conformée de façon à être placée contre le rebord d'une jante. La portion supérieure, ou radialement externe de la portion 2 forme une portion adaptée 5 au crochet de jante. Cette portion est souvent incurvée axialement vers l'extérieur, tel qu'illustré à la figure 1. La portion 2 se termine radialement et axialement vers l'intérieur par un siège de bourrelet, adapté pour être disposé contre un siège de jante. Le bourrelet comporte également une portion axialement interne 3, s'étendant sensiblement radialement depuis le siège vers le flanc 6.

Le pneumatique comporte également une structure de renfort 10 ou de renforcement de type carcasse pourvue de renforts avantageusement configurés selon un agencement sensiblement radial. Cette structure peut être agencée de façon continue d'un bourrelet à l'autre, en passant par les flancs et le sommet du pneumatique, ou encore, elle peut comporter deux ou plusieurs parties, agencées par exemple le long des flancs, sans couvrir la totalité du sommet.

Afin de positionner les fils de renforcement de façon aussi précise que possible, il est très avantageux de confectionner le pneumatique sur support rigide, par exemple un noyau rigide imposant la forme de sa cavité intérieure. On applique sur ce noyau, dans l'ordre requis par l'architecture finale, tous les constituants du pneumatique, qui sont disposés directement à leur place finale, sans que le profil du pneumatique doive être modifié lors de la confection.

Deux principaux types d'ancrage de la structure de renfort de type carcasse sont possibles. De façon typique, le retournement de ladite structure 10 autour d'une tringle 7 au niveau du bourrelet 1 assure l'ancrage de la structure de renfort de type carcasse dans le bourrelet, tel qu'illustré par exemple à la figure 3a.

Autrement, la fonction d'ancrage peut être réalisée grâce à un agencement de fils circonférentiel, tel qu'illustré par exemple à la figure 3b. Des fils circonférentiels 21 agencés de préférence sous forme de piles 22, forment un agencement de fils d'ancrage, prévu dans chacun des bourrelets. Ces fils sont de préférence métalliques, et éventuellement laitonnés. Diverses variantes prévoient avantageusement des fils de nature textile, comme par exemple en aramide, nylon, PET, PEN, ou hybride. Dans chaque pile, les fils sont avantageusement sensiblement concentriques et superposés.

Afin d'assurer un parfait ancrage de la structure de renfort, on réalise un bourrelet composite stratifié. A l'intérieur du bourrelet 1, entre les alignements de fil de la structure de renfort, on dispose les fils 21 orientés circonférentiellement. Ceux-ci sont disposés en une pile 22 comme sur les figures, ou en plusieurs piles adjacentes, ou en toute disposition judicieuse, selon le type de pneumatique et/ou les caractéristiques recherchées.

Les portions d'extrémité radialement internes de la structure de renfort 10 coopèrent avec les enroulements filaires. Il se crée ainsi un ancrage de ces portions dans lesdits bourrelets. Afin de favoriser cet ancrage, l'espace entre les fils circonférentiels et la structure de renfort est occupé par un mélange caoutchoutique 60 de liaison ou d'ancrage. On peut également prévoir l'utilisation de plusieurs mélanges ayant des caractéristiques différentes, délimitant plusieurs zones, les combinaisons de mélanges et les agencements résultants étant quasi-illimités. A titre d'exemple non limitatif, le module d'élasticité d'un tel mélange peut atteindre ou dépasser 10 à 15 Mpa, et même dans certains cas atteindre, voire dépasser 40 Mpa.

Les arrangements de fils peuvent être agencés et fabriqués de plusieurs façons. Par exemple, une pile peut avantageusement être constituée d'un seul fil enroulé (sensiblement à zéro degré) en spirale sur plusieurs tours, de préférence depuis le plus petit diamètre vers le plus grand diamètre. Une pile peut également être constituée de plusieurs fils concentriques posés l'un dans l'autre, de façon à ce que l'on superpose des anneaux de diamètre progressivement croissant. Il n'est pas nécessaire d'ajouter un mélange de caoutchouc pour assurer l'imprégnation du fil de renfort, ou des enroulements circonférentiels de fil.

Les figures 1 et 2 illustrent deux premiers modes de réalisation préférentiels selon l'invention. Dans l'exemple de la figure 1, au moins un fil circonférentiel 30 est disposé dans le flanc. Il s'agit avantageusement de fils de type sensiblement élastique. Ceux-ci sont disposés de préférence dans la portion sensiblement médiane des flancs. En général cette portion correspond à la section des flancs de plus grande largeur.

Le ou lesdits fils circonférentiels sont de type à bi-module. Un premier module, (de 0,2 à 2 GPa), pour le fonctionnement normal, permettant d'obtenir des propriétés s'apparentant à de bons pneumatiques standard, avec des bonnes caractéristiques notamment de confort et de résistance au roulement. Un second module, (de 20 à 100 GPa), apparaissant lorsque les flancs sont affaissés et les fils circonférentiels assujettis à d'importantes contraintes d'élongation/d'étirement, permettant de rigidifier les flancs et de supporter la charge induite par la perte de pression. Les fils circonférentiels sont préférentiellement efficaces dans le second cas, et interfèrent peu ou pas avec les qualités du pneumatique utilisé à pression sensiblement normale.

Le pourcentage d'allongement préférentiel correspondant à un changement de caractéristique modulaire (changement de pente sur un graphique contrainte-allongement) se situe entre 1 et 4 %, et de préférence entre 2 et 3 %.

Selon un autre mode de réalisation illustré à la figure 2, l'élasticité des fils est obtenue grâce à une configuration spécifique des câbles. Les fils circonférentiels sont disposés le long de la circonférence du pneumatique avec des ondulations circonférentielles. De cette façon, les fils n'occupent pas toujours la même position axiale en fonction de la position angulaire sur le flanc. Par contre, si plusieurs fils sensiblement parallèles sont utilisés, ceux-ci sont de préférence ondulés de façon à suivre des parcours similaires. Les fils sont donc tantôt plus vers l'intérieur, tantôt plus vers l'extérieur, en formant des ondulations ou vagues s'étendant circonférentiellement, le long des flancs. Ces ondulations sont avantageusement similaires (longueurs d'ondes, amplitudes, etc, comparables) à celles des fils de la structure de renfort de type carcasse (tel que décrit ci-après). - Par ailleurs, les ondulations de ces deux types d'éléments sont avantageusement en phase, de façon à sensiblement correspondre le long de leurs parcours respectifs.

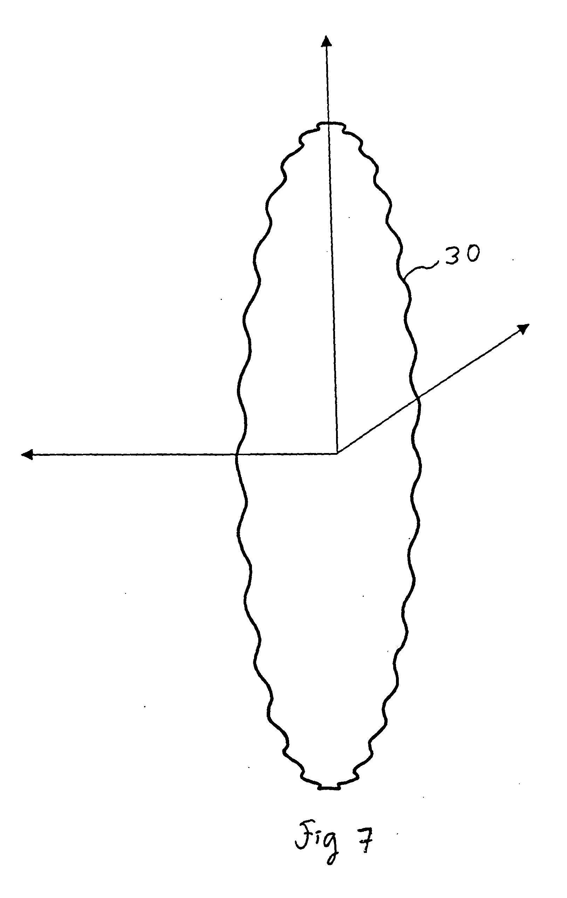

La figure 7 présente un exemple d'un tel fil circonférentiel 30 avec ondulations, présenté selon une vue en perspective en fonction des trois axes traditionnels, afin de mieux visualiser lesdites ondulations. Bien évidemment, les ondulations peuvent être plus faibles que celles représentées sur cette figure.

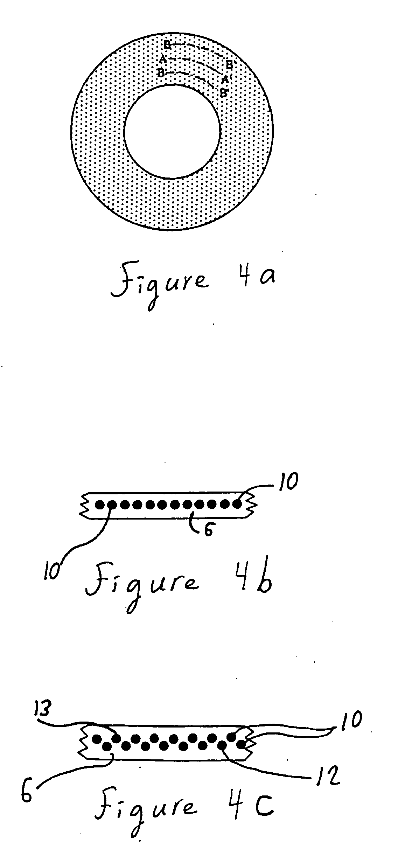

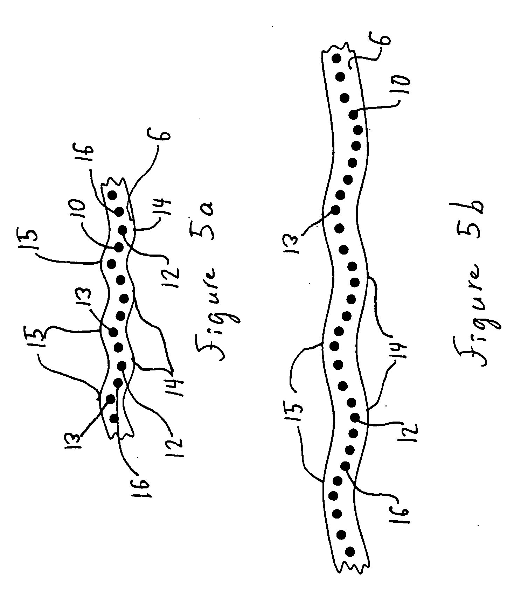

Les figures 3a et 3b illustrent une variante avantageuse de l'invention présentant différents cheminements possible pour la structure de renfort de type carcasse 10. Une zone de flanc avec ondulations 11 s'étend radialement dans le flanc entre le bourrelet 1 et la zone de sommet 9. Hors de cette zone, tous les fils de structure de type carcasse occupent une position radiale sensiblement identique dans le flanc. Mais dans cette zone 11, les différents fils répartis le long du flanc n'occupent pas tous la même position radiale. Cela est bien visible sur les figures 4c, 5a et 5b en plus de la figure 3b. Les différentes positions possible se situent entre un cheminement de structure de renfort le plus axialement intérieur 12 et un cheminement de structure de renfort le plus axialement extérieur 13 (en trait pointillé).

Entre ces positions extrêmes, on peut retrouver une ou plusieurs séries de positions intermédiaires 16, comme illustré par exemple aux figures 5a et 5b. Autrement, tel que montré à la figure 4c, on peut ne retrouver que les positions limites, sans aucune position intermédiaire.

Les figure 4b et 4c illustrent bien les nuances ou variations de positions axiales des fils de structure de renfort dans le flanc, en fonction de la position radiale dans ce dernier. Ainsi, la figure 4b montre bien un arrangement sensiblement linéaire des fils dans le flanc, dans la mesure où on observe les fils hors de la zone ondulée, comme par exemple aux positions radiales B-B' illustrées à la figure 4a. La figure 4c montre les mêmes fils à une positon radiale correspondant sensiblement à la zone ondulée, comme par exemple à la position radiale A-A' illustrées à la figure 4a. La zone A-A' est donc comprise dans la zone ondulée 11 ou intervalle multi-positions.

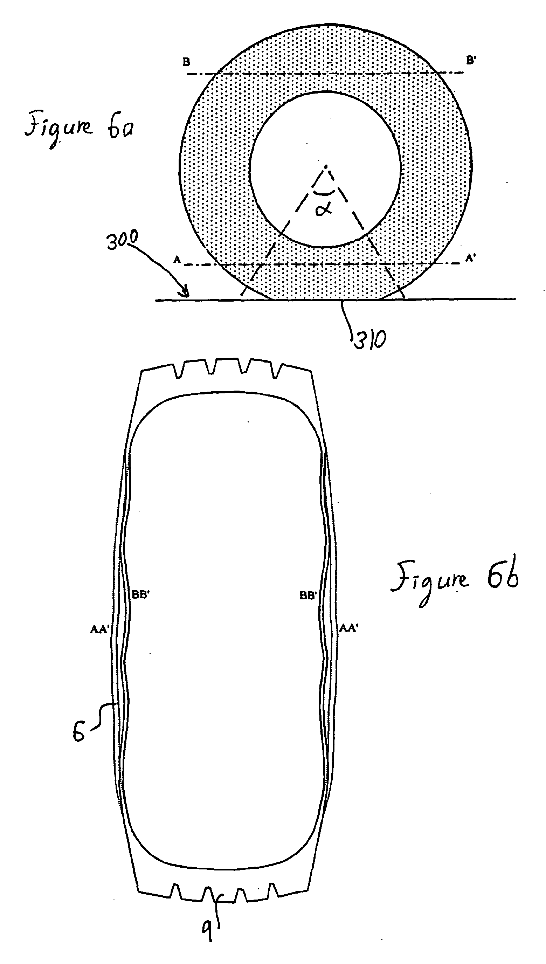

Les figures 6a et 6b illustrent l'influence de la position angulaire d'un pneumatique selon l'invention par rapport au sol 300, sur les évolutions dynamiques de la forme et de l'amplitude des ondulations. Dans la zone du flanc délimitée par l'angle α, correspondant sensiblement à l'aire de contact 310 avec le sol 300, le flanc subit une sollicitation mécanique tendant à tendre, étirer ou redresser les ondulations, tel qu'illustré à la figure 6b pour le profil A-A' en traits pointillés, correspondant à la coupe A-A' de la figure 6a. La figure 6b montre par ailleurs, en traits pleins, le profil B-B', avec les ondulations, correspondant à la coupe B-B' de la figure 6a, c'est-à-dire dans une zone ne subissant pas l'influence de l'aire de contact.

En faisant un parallèle avec le comportement dynamique d'un pneumatique de type radial traditionnel (sans ondulations), on note les points suivants. Lors du passage au niveau de l'aire de contact 310, de multiples sollicitations mécaniques interviennent. Entre le point d'entrée et le point de sortie de l'aire de contact, le pneumatique subit une importante contrainte d'allongement dans le sens circonférentiel. Au niveau des flancs, ces sollicitations occasionnent un phénomène de « déradialisation » des fils de la structure de renfort. Les fils ont donc tendance à s'écarter les uns des autres, suite à un étirement élastique du mélange caoutchoutique du flanc entre les fils. Ce phénomène entraîne lui-même un certain échauffement du pneumatique, qui contribue à augmenter la résistance au roulement et affecte l'endurance du produit.

Avec un pneumatique selon l'invention, comportant une zone de flanc avec ondulations, les mêmes sollicitations mécaniques se manifestent entre l'entrée et la sortie de l'aire de contact. Cependant, les ondulations procurent une sorte de « réserve » de matière, disponible pour répondre aux diverses sollicitations mécanique dues aux déformations au niveau du passage dans l'aire de contact, et en particulier les sollicitations circonférentielles. Cette réserve disponible réduit ou peut même dans certains cas éviter le recours à l'étirement du mélange caoutchoutique entre les fils. On assiste donc à une déformation des ondulations dans la zone angulaire du pneumatique correspondant à l'aire de contact. Lesdites ondulations « s'aplanissent », ou diminuent d'amplitude. Les sollicitations mécaniques dues à l'aire de contact sont donc en quelque sorte amorties ou absorbées par les ondulations des flancs. Cette déformation se réalise avec un échauffement sensiblement limité par rapport à un étirement du mélange caoutchoutique. Les caractéristiques de résistance au roulement et d'endurance sont par conséquent peu affectées.

Lors de la phase d'aplanissement des ondulations, les fils 30 ont un comportement similaire, si bien que leurs ondulations s'aplanissent aussi, jusqu'à ce que les fils deviennent de plus en plus sujets à des efforts de tension circonférentiels. Les fils circonférentiels mis en tension engendrent un blocage sensiblement progressif du flambage des flancs. Finalement, ces fils ont un effet de soutien des flancs, qui ne peuvent plus s'affaisser. Les flancs peuvent donc soutenir ou supporter les efforts, un peu à la façon d'un pneumatique autoporteur, mais avec un soutien dû à un élément agissant circonférentiellement plutôt que radialement.

Ce phénomène de blocage circonférentiel progressif permet ainsi d'avoir des situations distinctes : en mode de pression normale, avec les ondulations des fils circonférentiels et des fils de la structure de renfort de type carcasse, les flancs sont sensiblement souples ; en mode de pression faible, avec atténuation de plus en plus forte des deux types d'ondulations dans la portion du pneumatique correspondant sensiblement à la zone de contact avec le sol, la rigidification des flancs permet de réaliser une fonction d'auto-portage.

Dans le cas où le moyen de support de flanc est un câble bi-module, l'effet est comparable, sauf que l'élasticité est conférée par les câbles circonférentiels plutôt que par les ondulations.

La fabrication industrielle d'un pneumatique selon l'invention peut être réalisée selon plusieurs types de procédés. De manière avantageuse, on utilise un principe de pose sur noyau central permettant soit la pose individuelle des éléments constituants tels les mélanges caoutchoutiques et les renforts (fils) ou encore la pose de produits semi-finis tels des lamelles caoutchoutiques renforcées. Avec un tel procédé, on utilise un noyau central pourvu d'ondulations dans la zone correspondant sensiblement à la zone 11 du pneumatique, permettant ainsi de conférer, dès la pose des différents éléments, la forme ou profil ondulé des flancs, telle que préalablement décrite.

## Revendications

1. Pneumatique comportant au moins une structure de renfort de type carcasse ancrée de chaque côté du pneumatique dans un bourrelet dont la base est destinée à être montée sur un siège de jante, chaque bourrelet se prolongeant radialement vers l'extérieur par un flanc, les flancs rejoignant radialement vers l'extérieur une bande de roulement et comportant au moins un moyen de support de flanc à augmentation de rigidité sensiblement progressive, disposé dans la portion sensiblement médiane desdits flancs, la structure de renfort de type carcasse s'étendant circonférentiellement depuis le bourrelet vers ledit flanc, une armature de sommet, chacun des bourrelets comportant par ailleurs une zone d'ancrage permettant le maintien de la structure de renfort dans chacun desdits bourrelets, **caractérisé en ce que** ledit moyen de support comporte au moins un fil circonférentiel agencés sur la circonférence suivant des positions axiales différentes, de façon à former le long du parcours circonférentiel, une succession d'ondulations sensiblement régulières formant un profil circonférentiel ondulé.

2. Pneumatique selon la revendication 1, dans lequel ladite structure de renfort de type carcasse est agencée de façon à ce que, dans la portion sensiblement médiane du flanc, les fils de ladite structure de renfort comportent, sur la circonférence, des positions axiales différentes, de façon à former le long du parcours circonférentiel, une succession d'ondulations sensiblement régulières formant un profil circonférentiel ondulé.

3. Pneumatique selon !a revendication 2, dans lequel les ondulations formées par lesdits fils circonférentiels d'une part et les ondulations formées par les fils de structure de renfort d'autre part, sont sensiblement en correspondance.

## Claims

1. A tyre comprising at least one carcass-type reinforcement structure anchored on each side of the tyre in a bead whose base is intended to be fitted on a rim seat, each bead being extended radially towards the outside by a sidewall, the sidewalls meeting up radially towards the outside with a tread and comprising at least one sidewall support means exhibiting a substantially progressive increase in rigidity, disposed in the substantially median portion of said sidewalls, the carcass-type reinforcement structure extending circumferentially from the bead towards said sidewall, a crown reinforcement, each of the beads comprising furthermore an anchoring zone allowing the reinforcement structure to be retained in each of said beads, **characterised in that** said support means comprising at least one circumferential cord arranged on the circumference in different axial positions, so as to form around the circumference a succession of substantially regular undulations forming an undulating circumferential profile.

2. A tyre according to Claim 1, in which said carcass-type reinforcement structure is arranged in such a way that, in the substantially median portion of the sidewall, the cords of said reinforcement structure exhibit different axial positions on the circumference, so as to form around the circumference a succession of substantially regular undulations forming an undulating circumferential profile.

3. A tyre according to Claim 2, in which the undulations formed by said circumferential cords on the one hand and the undulations formed by the reinforcement structure cords on the other hand are substantially congruent.

## Patentansprüche

1. Reifen, umfassend mindestens eine Verstärkungsstruktur der Art Karkasse, die auf jeder Seite des Reifens in einem Wulst verankert ist, dessen Basis dazu bestimmt ist, auf einer Felgenschulter befestigt zu werden, wobei jeder Wulst durch eine Seitenwand radial nach außen verlängert ist, wobei die Seitenwände radial nach außen mit einer Lauffläche zusammentreffen und mindestens ein Seitenwandstützmittel mit im Wesentlichen progressiver Erhöhung der Steifigkeit umfassen, das in dem im Wesentlichen medianen Abschnitt der Seitenwände befindlich ist, wobei sich die Verstärkungsstruktur der Art Karkasse in Umfangsrichtung erstreckt, vom Wulst aus zur Seitenwand hin, einen Gürtel, wobei jeder der Wülste ferner eine Verankerungszone umfasst, die das Erhalten der Verstärkungsstruktur in jedem der Wülste ermöglicht, **dadurch gekennzeichnet, dass** das Stützmittel mindestens einen Umfangsdraht umfasst, der auf dem Umfang nach unterschiedlichen axialen Positionen angeordnet ist, um an der Umfangsstrecke entlang eine Aufeinanderfolge von im Wesentlichen regelmäßigen Wellenformen zu bilden, die ein gewelltes Umfangsprofil bilden.

2. Reifen nach Anspruch 1, wobei die Verstärkungsstruktur der Art Karkasse derart angeordnet ist, dass in dem im Wesentlichen medianen Abschnitt der Seitenwand die Drähte der Verstärkungsstruktur auf dem Umfang unterschiedliche axiale Positionen umfassen, um an der Umfangsstrecke entlang eine Aufeinanderfolge von im Wesentlichen regelmäßigen Wellenformen zu bilden, die ein gewelltes Umfangsprofil bilden.

3. Reifen nach Anspruch 2, wobei einerseits die Wellenformen, die durch die Umfangsdrähte gebildet werden, und andererseits die Wellenformen, die durch die Verstärkungsstrukturdrähte gebildet werden, sich im Wesentlichen entsprechen.
